Europäisches Patentamt

European Patent Office

Office européen des brevets

(11) Publication number: **0 107 889**
**B1**

(12) **EUROPEAN PATENT SPECIFICATION**

(45) Date of publication of patent specification: **05.08.87**

(21) Application number: **83300366.8**

(22) Date of filing: **25.01.83**

(51) Int. Cl.⁴: **G 21 C 19/06,** G 21 F 1/08,
G 21 C 19/40

(54) **Compact rack for storing used nuclear fuel assemblies.**

(30) Priority: **29.10.82 JP 188962/82**

(43) Date of publication of application:
**09.05.84 Bulletin 84/19**

(45) Publication of the grant of the patent:
**05.08.87 Bulletin 87/32**

(84) Designated Contracting States:
**DE FR SE**

(56) References cited:
**EP-A-0 004 133**
**FR-A-2 404 284**
**FR-A-2 440 060**
**GB-A-1 078 028**
**US-A-4 088 897**
**US-A-4 143 276**

(73) Proprietor: **Hitachi, Ltd.**
**5-1, Marunouchi 1-chome**
**Chiyoda-ku Tokyo 100 (JP)**

(72) Inventor: **Ikuta, Isao**
**64-4 Tenjota Uchigomimayacho**
**Iwaki-shi (JP)**
Inventor: **Minemura, Tetsuroh**
**36-4-506 Nishinarusawacho-1-chome**
**Hitachi-shi (JP)**
Inventor: **Ishihara, Joo**
**13-21 Mizukicho-2-chome**
**Hitachi-shi (JP)**
Inventor: **Tamamura, Takeo**
**16-18 Nishinarusawacho-2-chome**
**Hitachi-shi (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

## Description

This invention relates to a compact rack for storing used nuclear fuel assemblies.

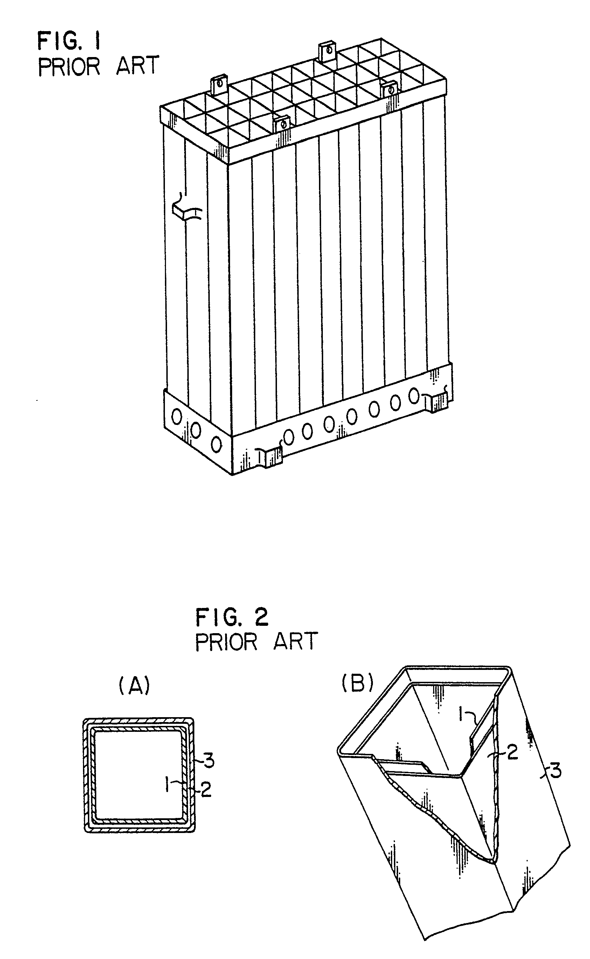

Used nuclear fuel assemblies withdrawn from a nuclear reactor in a nuclear power plant are stored in a pure water pool until the fuel is reprocessed. Recently an improvement has been attempted in order to shorten the stored fuel spacing more effectively to utilize the space of the pool for storing the used fuel assemblies. A rack having a plurality of unit square cross sectional rectilinear tubes, herein also called "square cylinders" based on such a concept is called a compact rack, which will be hereinafter referred to merely as "rack", e.g. as shown in Fig. 1, where a conventional rack encasing 30 square cylinders is illustrated. The requirements for the rack are (1) uniform neutron absorption, (2) high corrosion resistance, and (3) high strength.

The conventional square cylinder forming a rack unit is made from austenite stainless steel, whose neutron absorption is as small as about 3.2 cm²/100 g. On the other hand it has been proposed to make square cylinders from a composite plate of $B_4C$ and Al, whose neutron absorption is as high as 775 cm²/100 g, but the composite plate itself is brittle and is difficult to bend and also has poor corrosion resistance. Furthermore it has been attempted to add boron to stainless steel to increase the neutron absorption and to make square cylinders from such material, 7.1% by atom of boron being added to stainless steel to obtain a neutron absorption of 66 cm²/100 g. However, the rolling property of the material deteriorates above 7.1% by atom of boron and no practical square cylinders are obtained.

To solve the problem, it has been attempted to use a material obtained by pulverizing and sintering stainless steel containing boron, but the binding property of powders themselves is poor and the strength is not satisfactory. With a view to the processability, the upper limit is 19.4% by atom of boron. When stainless steel particles containing boron and stainless steel particles containing no boron are mixed and sintered, the stainless steel powder containing no boron works so effectively that the overall boron content can be increased up to 34% by atom. However, the resulting material contains particles containing boron and particles containing no boron bonded together, and thus has still the problem of microscopically uneven neutron absorption due to the segregation of boron.

The various materials for square cylinders so far proposed as described have poor corrosion resistance and thus undergo corrosion when in direct contact with pure water. Thus, these neutron absorber materials are used in a square cylinder structure such as shown in Fig. 2(A) and (B), where a square cylinder comprises an inner cylinder 1 of austenite stainless steel and an outer cylinder 3 of austenite stainless steel, and a neutron absorber material 2 sealed between the inner cylinder and the outer cylinder by welding so that the neutron absorber material can be prevented from direct contact with pure water. However, the neutron absorber material is sealed between the inner and outer cylinders, and when boron turns into helium gas by neutron irradiation, the square cylinder is liable to be expanded thereby, and there is a problem that it may not be possible to withdraw a fuel assembly from the square cylinder. Furthermore, the square cylinder has a large thickness and the aim of making the rack more compact cannot be attained.

US—A—4088897 for example describes a nuclear fuel storage rack in which a plurality of substantially identical square-section elongate rectangular tubes are arranged in a square array, with poison material acting as neutron absorber sealed in the tube walls. In column 3, line 53 there is mentioned a checkerboard array.

An object of the present invention is to provide a compact rack for storing used nuclear fuel assemblies, having a high and uniform neutron absorption, a high corrosion resistance and a small cross-sectional area.

The present invention is set out in claim 1.

Preferably the neutron absorber material is a nickel-based alloy containing 10—30% by atom of B, 5—25% by atom of Cr and 1—15% by atom of P and at least 30% by atom of Ni and having a pitting corrosion potential of at least 0.9 V. Furthermore this neutron absorber material may contain 15—18% by atom of B, 12—20% by atom of Cr, 3—12% by atom of P, the balance being Ni and inevitable impurities, or may contain B, Cr and P, and not more than 25% by atom of Fe, optionally not more than 10% by atom of at least one of Mo, W, Ti, Nb and V, the balance being not less than 30% by atom of Ni and inevitable impurities, where preferably the neutron absorber material contains 15—18% by atom of B, 12—20% by atom of Cr, and 3—12% by atom of P.

Embodiments of the invention are described below by way of example with reference to the drawings.

Fig. 1 is a schematic view of the well known compact rack for storing used nuclear fuel assemblies.

Fig. 2(A) and B are a cross-sectional plan view and a schematic view, respectively, of known unit square cylinder for rack using a neutron absorber material.

Fig. 3 is a diagram showing a zone for forming an amorphous phase in $Ni$—$P$—$B$—$Cr_{15}$—$Fe_{10-20}$ systems.

Fig. 4 is a diagram showing changes in pitting corrosion potential in $Ni$—$P_{2.5-3.5}$—$B$—$Cr_{15}$—$Fe_{15}$ systems.

Fig. 5 is a diagram showing changes in pitting corrosion potential in $Ni$—$P$—$B_{17.5}$—$Cr_{15}$ systems.

Fig. 6 is a diagram showing changes in pitting corrosion potential in $Ni$—$P_{3.5}$—$B_{17.5}$—$Cr$—$Fe_{15}$ systems.

Fig. 7 is a diagram showing changes in pitting corrosion potential in $Ni$—$P_{3.5}$—$B_{17.5}$—$Cr_{15}$—$Fe$ systems.

Fig. 8(A) and (B) are a cross-sectional plan view and a schematic view, respectively, of a unit square cylinder for rack according to one embodiment of the present invention.

Fig. 9(A) and (B) are a cross-sectional plan view and a schematic view, respectively, of a unit square cylinder for rack according to another embodiment of the present invention.

Fig. 10 is a plan view showing an arrangement of the square cylinders shown in Fig. 8 in a rack according to the present invention.

Fig. 11 is a plan view showing another arrangement of the square cylinders shown in Fig. 9 in a rack according to the present invention.

According to the present invention, an amorphous neutron absorber material containing boron as a neutron-absorbing element to a maximum with a good corrosion resistance even in direct contact with pure water is preferably used as a material for the square cylinder. That is, in the present invention, a nickel-based amorphous alloy containing B, Cr and P and having a pitting corrosion potential of at least 0.9 V as a neutron absorber material is preferably used as a material for the square cylinder. It is desired for the nickel-based alloy for use in the present invention to have a toughness capable of tight bending of at least 90°, particularly preferably of 180°. To obtain such toughness, it is preferable to utilize a molten metal-quenching method as used in the production of amorphous alloy. It is not always necessary that the alloy is 100% amorphous, but is preferable that it is rather completely amosphous.

Generally, boron, when added to steel or nickel in an amount above 9.2% by atom, embrittles the product, leading to failure in further processing. In the present invention, a molten metal containing boron may be subjected to ultra-rapid quenching and solidification at a cooling speed of about $10^3$—$10^{6\circ}$C/sec to increase the boron content to a very high neutron absorption and to obtain an amorphous product. The amorphous product is in a thin strip, 20—30 μm in thickness, having a high strength and high toughness, and the boron is uniformly distributed in the thin strip.

The method for producing such amorphous material includes, for example, a method comprising inserting a molten raw materials having a predetermined composition into a nozzle made from quartz or the like, remelting the raw materials by a heater, injecting the molten raw materials into between two rotating rolls at a high speed by a high pressure argon gas and quenching and solidifying the injected raw materials at a rate of about $10^3$—$10^{6\circ}$C/sec, thereby obtaining an amorphous product alloy in a ribbon form.

The amorphous alloy can be obtained from raw materials containing iron, nickel and cobalt as base metals and further containing 20—30% by atom of phosphorus, boron, silicon, carbon, etc. in total as amorphous phase-forming elements on the basis of the total alloy. A typical system of anti-corrosive amorphous alloys is a system of Fe—P—C—Cr, which is however very poor in neutron absorption owing to absence of boron therein. Thus, nickel is preferred as a more corrosion-resistant metal to iron for the base metal for corrosion-resistant amorphous alloys containing boron. The corrosion resistance of semi-metals is poorer in the order phosphorus, carbon, boron and silicon, and thus phosphorus and boron are preferred as amorphous phase-forming elements.

Zones for forming an amorphous phase and corrosion resistance in a Ni—P—B system further containing chromium as a corrosion resistance-enhancing element, i.e. a Ni—P—B—Cr system and that further containing Fe, i.e. a Ni—P—B—Cr—Fe are investigated.

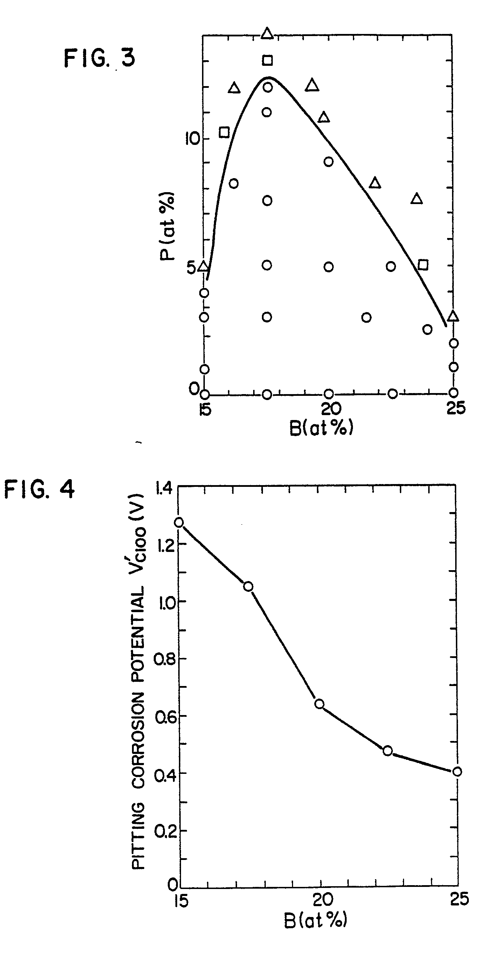

In Fig. 3 an amorphous phase-forming zone of a Ni—P—B—Cr$_{15}$—Fe$_{10-20}$ system containing 15% by atom of Cr and 10—20% by atom of Fe is shown, where the circle mark shows the amorphous phase, the square mark shows a mixture of the amorphous phase and the crystalline phase, and the triangle mark shows the crystalline phase. As is obvious from Fig. 3, a maximum phosphorus content can be obtained at the boron content of 17.5% by atom, and the amorphous phase can be obtained even at the boron content of 25% by atom. Thus, to increase the neutron absorption, it is preferable to use an amorphous alloy containing a higher boron content, but the amorphous alloy must be corrosion-resistant even when it comes into direct contact with pure water with a view to making the rack more compact.

In Fig. 4, changes in pitting corrosion resistance of a Ni—P$_{2.5-3.5}$—B—Cr$_{15}$—Fe$_{15}$ system with a varying boron content in an aqueous 3% NaCl solution at 20°C are shown. As is obvious from Fig. 4 the pitting corrosion resistance is decreased with increasing boron content, that is, the corrosion resistance becomes poorer.

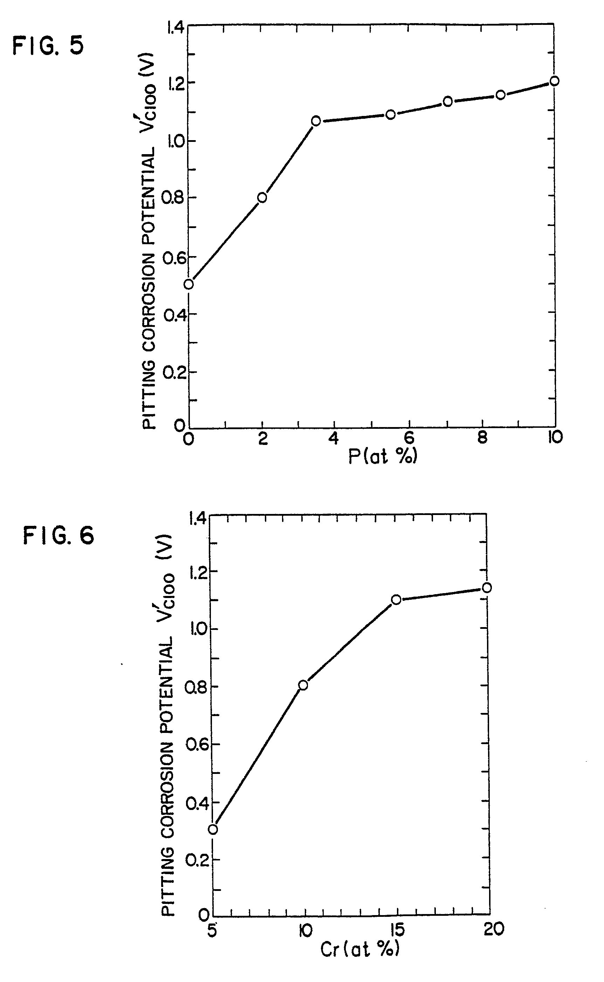

In Fig. 5, changes in pitting corrosion potential of a Ni—P—B$_{17.5}$—Cr$_{15}$—Fe system with varying phosphorus content are shown. In contrast to boron, phosphorus is a corrosion resistance-enhancing element, and thus the pitting corrosion resistance is increased with increasing phosphorus content, and the pitting corrosion potential is 1.0 V above the phosphorus content of about 3.5% by atom.

In Fig. 6 changes in pitting corrosion potential of a Ni—P$_{3.5}$—B$_{17.5}$—Cr—Fe$_{15}$ system with varying Cr content as a corrosion resistance-enhancing element are shown. The pitting corrosion potential is low at the chromium content of 5% by atom, which is not effective, but above the chromium content of about 10% by atom, it is 0.8 V or higher.

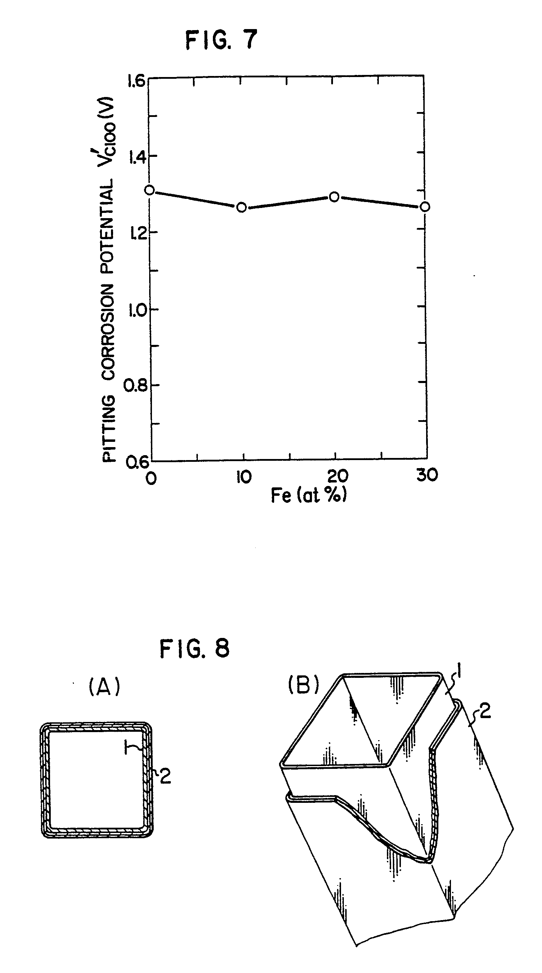

In Fig. 7, changes in pitting corrosion potential of a Ni—P$_{3.5}$—B$_{17.5}$—Cr$_{15}$—Fe system with varying iron content are shown, where the addition of iron has an aim of increasing the strength. As is obvious from Fig. 7, the pitting corrosion potential is not changed even by addition of iron up to 30% by atom.

Table 1 shows results of crevice corrosion tests substantially identical with actual operating circumstances, where test square cylinders, each having a one-fourth size of an actual square cylinder (164 mm × 164 mm × 6 mm thick) were wound with thin stripes of neutron absorber materials and dipped in

**0 107 889**

pure water at 85°C for 10,000 hours and the occurrence of crevice corrosion between the thin strips was investigated. Sample Nos. 1—7 were tested to observe the influence of phosphorus, Sample Nos. 8—11 that of boron, Sample Nos. 12—16 that of chromium, and Sample Nos. 17—22 that of iron, where the circle mark shows no occurrence of corrosion and the triangle mark occurrence of partial corrosion.

In the tests the pitting corrosion potential was determined from current-potential curves obtained by using a potentiostat (HA—104 made by Hokuto Denko K.K., Japan), a silver chloride reference electrode in an aqueous 3% NaCl solution as a corrosion test solution, and a logarithmic converter (HG—101 made by Hokuto Denko K.K. Japan) at a potential scanning speed of $3 \times 10^3$ sec/V.

4

TABLE 1

| Sample No. | Composition (at %) | | | | | Neutron absorption (cm²/100 g) | Tensile strength (Kg/mm²) | Occurrence of corrosion | Pitting corrosion potential V'c 100 (V) |
|---|---|---|---|---|---|---|---|---|---|
| | Ni | P | B | Cr | Fe | | | | |
| 1 | 68 | 0 | 17 | 15 | — | 158 | 200 | Δ | 0.5 |
| 2 | 67 | 1 | 17 | 15 | — | 158 | 203 | Δ | 0.6 |
| 3 | 65.5 | 2.5 | 17 | 15 | — | 157 | 204 | Δ | 0.8 |
| 4 | 65 | 3 | 17 | 15 | — | 157 | 201 | ○ | 0.9 |
| 5 | 63 | 5 | 17 | 15 | — | 157 | 200 | ○ | 1.1 |
| 6 | 60 | 8 | 17 | 15 | — | 157 | 209 | ○ | 1.2 |
| 7 | 56 | 12 | 17 | 15 | — | 157 | 215 | ○ | 1.3 |
| 8 | 65 | 5 | 15 | 15 | — | 156 | 209 | ○ | 1.1 |
| 9 | 62 | 5 | 18 | 15 | — | 173 | 210 | ○ | 1.2 |
| 10 | 60 | 5 | 20 | 15 | — | 196 | 215 | Δ | 0.7 |
| 11 | 55 | 5 | 25 | 15 | — | 255 | 215 | Δ | 0.5 |
| 12 | 70 | 7 | 18 | 5 | — | 173 | 213 | Δ | 0.5 |
| 13 | 65 | 7 | 18 | 10 | — | 173 | 212 | Δ | 0.8 |

TABLE 1 (continued)

| Sample No. | Composition (at %) | | | | | Neutron absorption (cm²/100 g) | Tensile strength (Kg/mm²) | Occurrence of corrosion | Pitting corrosion potential V'c 100 (V) |
|---|---|---|---|---|---|---|---|---|---|
| | Ni | P | B | Cr | Fe | | | | |
| 14 | 63 | 7 | 18 | 12 | — | 173 | 210 | ○ | 0.9 |
| 15 | 60 | 7 | 18 | 15 | — | 172 | 203 | ○ | 1.2 |
| 16 | 55 | 7 | 18 | 20 | — | 172 | 209 | ○ | 1.3 |
| 17 | 61 | 6 | 18 | 15 | 0 | 173 | 203 | ○ | 1.3 |
| 18 | 56 | 6 | 18 | 15 | 5 | 173 | 210 | ○ | 1.3 |
| 19 | 51 | 6 | 18 | 15 | 10 | 173 | 218 | ○ | 1.2 |
| 20 | 46 | 6 | 18 | 15 | 15 | 172 | 225 | ○ | 1.2 |
| 21 | 41 | 6 | 18 | 15 | 20 | 171 | 232 | ○ | 1.2 |
| 22 | 36 | 6 | 18 | 15 | 25 | 171 | 240 | ○ | 1.3 |
| 23 | 7.4 | | 9.2 | 18.7 | 64.7 | 87.0 | 3 | — | — |
| 24 | 7.6 | | 9.8 | 18.6 | 64.0 | 87.3 | 35 | — | — |

As is obvious from Table 1, partial corrosion occurs at a phosphorus content of 0—2.5% by atom, and no corrosion occurs at or above 3% by atom. To increase the neutron absorption it is preferable to increase the boron content, but as is obvious from Table 1 partial corrosion occurs at or above 20% by atom of boron, and thus 18% by atom of boron or less is preferable. At the chromium content of 10% by atom of chromium, partial corrosion occurs, but at or above 12% by atom, no corrosion occurs. No corrosion occurs at an iron content of 0—25% by atom.

In Table 1, the tensile strength was determined by Amsler tensile testing machine, and the tensile strength is increased with increasing iron content. This is preferable when thin strips are wound around a square cylinder under tension.

As a result of pitting corrosion potential measurement and crevice corrosion tests, it is obvious that no crevice corrosion occurs at least at a pitting corrosion potential of about 0.9 V. Thus, to maintain a pitting corrosion potential at least at 0.9 V and an alloy in an amorphous phase, it is desirable that an amorphous alloy for the neutron absorption contains 3—12% by atom of P, 15—18% by atom of B, and 12—20% by atom of Cr, and 0—25% by atom of Fe, the balance being Ni and contingent impurities. That is, corrosion takes place below 3% by atom of P, whereas no amorphous phase is obtained above 12% by atom of P. No amorphous phase is obtained below 15% by atom of B, whereas corrosion takes place above 18% by atom of B. Corrosion takes place below 12% by atom of Cr, whereas no amorphous phase is obtained above 20% by atom of Cr. No amorphous phase is obtained above 25% by atom of Fe, and thus 0—25% by atom of Fe is preferable.

The neutron absorber amorphous alloy for use in the present rack can contain at least one of Mo, W, Ti, Nb and V in addition to P, B, Cr, and Fe.

Table 2 shows the effect of adding Mo, W, Ti, Nb or V to a Ni—P—B—Cr—Fe system. Testing procedures and evaluation are the same as given in Table 1. As is obvious from Table 2, Sample Nos. 1—5 have pitting corrosion potentials of more than 0.9 V and no corrosion takes place.

Further addition of highly neutron-absorptive elements such as Gd, Sm, Eu, Rh, Cd, In, Zr, Hf, Ir, etc. to those shown in Table 2 can increase the neutron absorption of the neutron absorber material. In that case, it is preferable that Hf is in an amount of not more than 15% by atom, and other elements are in an amount of not more than 5% by atom alone or in combination.

Table 3 shows properties of stainless steel SUS 304 and the amorphous alloys here discussed for use in the present invention as a neutron absorber material.

Stainless steel SUS 304 has a pitting corrosion potential of 0.3 V. An amorphous material of $Ni_{55}P_5B_{25}Cr_{15}$ (at. %) containing 25% by atom of boron has a neutron absorption of 225 $cm^2$/100 g but has a low pitting corrosion potential and thus undergoes partial corrosion. On the other hand, an amorphous alloy of $Ni_{46}P_6B_{18}Cr_{15}Fe_{15}$ (at. %) for use in the present invention has a lower neutron absorption than that containing 25% by atom of boron, but has a higher pitting corrosion potential, and thus undergoes no corrosion.

TABLE 2

| Sample No. | Composition (at %) | | | | | | | | | | Neutron absorption (cm²/100 g) | Tensile strength (Kg/mm²) | Occurrence of corrosion | Pitting corrosion potential V'c 100 (V) |
|---|---|---|---|---|---|---|---|---|---|---|---|---|---|---|
| | Ni | P | B | Cr | Fe | Mo | W | Ti | Nb | V | | | | |
| 1 | 51 | 5 | 18 | 15 | 10 | 1 | — | — | — | — | 173 | 219 | ○ | 1.2 |
| 2 | 49 | 5 | 18 | 15 | 10 | — | — | 3 | — | — | 173 | 222 | ○ | 1.2 |
| 3 | 53 | 5 | 18 | 13 | 10 | — | — | — | 1 | — | 173 | 220 | ○ | 1.1 |
| 4 | 50 | 3 | 18 | 13 | 15 | — | — | — | — | 1 | 173 | 221 | ○ | 1.2 |
| 5 | 50 | 3 | 18 | 13 | 15 | — | 1 | — | — | — | 173 | 221 | ○ | 1.2 |

TABLE 3

| | | Neutron absorption (cm³/100 g) | Tensile strength (kg/mm²) | Pitting corrosion V'c (100 (V) | Occurrence of corrosion |
|---|---|---|---|---|---|
| Crystalline | SUS304 | 3.2 | 35 | 0.3 | — |
| Amorphous | $Ni_{55}P_5B_{25}Cr_{15}$ | 225 | 215 | 0.5 | △ |
| | $Ni_{46}P_6B_{18}Cr_{15}Fe_{15}$ | 172 | 240 | 1.2 | ○ |

The unit square cylinder for use in the present rack can have the structures shown in Figs. 8—11 and the rack can be made highly compact. In Fig. 8 one embodiment of a unit square cylinder for use in the present rack is shown, where the square cylinder has a structure in which thin strips of the said amorphous neutron absorber 2 having a length of 100 m or more, a width of 160 mm, a thickness of, for example, 20—30 μm, were wound up around a stainless steel cylinder 1 of, for example, austenite stainless steel and dimensions of 152 mm × 4280 mm and 6 mm thick, to obtain a thickness of at least 1 mm to reduce the crevices between the square cylinders to zero. In this case the neutron absorber material is not sealed in and thus there is no fear of expansion due to the generation of helium gas, and a highly compact rack can be provided thereby.

In this embodiment if the wrapping thickness is less than 1 mm, the fuel in the square cylinders cannot be kept in a non-critical state, and the distance between the square cylinders must be made larger and no higher compactness of the rack will be obtained than by the above arrangement with zero crevices. In other words, a more highly compact rack cannot be provided.

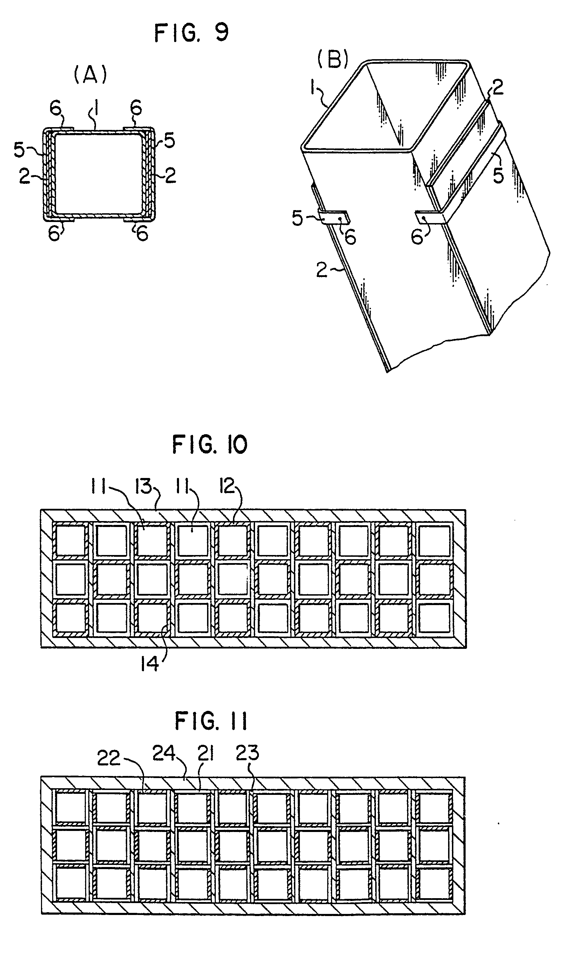

In Fig. 9, another embodiment of the unit square cylinder for use in the present rack is shown, where the thin strips 2 of the said neutron absorber material are overlaid on only a pair of opposite outside faces of a stainless steel square cylinder 1 to a thickness of about 1 mm, and bands 5 are provided on the overlaid strips 2 and spot-welded at points 6. Various welding methods are available, but spot welding is preferred when thin strips of amorphous material are secured by welding, because the amorphous material is sensitive to heat (for example, crystallization takes place at about 450°C, making the material brittle), and the ordinary welding makes the amorphous material brittle due to the effect of heat. Only if a measure is to be made to protect the thin strips of amorphous material from the effect of heat, the ordinary welding can be applied. The strips of amorphous neutron absorber material can be overlaid on only one side of a square cylinder, or all the outsides of a square cylinder, and equivalent corrosion resistance can be of course obtained in these cases.

Fig. 10 shows a structure of a rack in which unit square cylinders 12 each comprised of an inner cylinder and thin strips of an amorphous neutron absorber material wound up around the inner cylinder as shown in Fig. 8 and unit square cylinders 11 each comprised only of an inner cylinder not wound with the thin strips of the amorphous neutron absorber material are arranged alternately in both lateral and longitudinal direction in a rack frame 13 using spacers 14, whereby a practical shielding effect of neutron absorption can be obtained with the minimum use of neutron absorber material.

Fig. 11 shows another structure of a rack in which unit square cylinders each having thin strips of amorphous neutron absorber material overlaid only on a pair of opposite outer sides of an inner cylinder are so arranged that the overlaid sides of one square cylinder face the unoverlaid sides of other square cylinders, where numeral 22 shows the overlaid sides, numeral 21 the unoverlaid sides, numeral 23 spacers and numeral 24 a rack.

According to the present invention, the unit square cylinder is comprised of an inner cylinder wound up with the thin strips of amorphous neutron absorber material around the inner cylinder or overlaid with the sheets of amorphous neutron absorber material at least on a pair of opposite outer sides of the inner cylinder and thus requires no outer cylinder around the amorphous neutron absorber material. The amorphous neutron absorber material preferred for use in the present invention usually has a high strength and a high toughness and also an amorphous thin ribbon-like form, and thus the neutron absorption of the present rack can be increased by using unit square cylinders each provided with the spirally wound or overlaid strips of such amorphous neutron absorber material at the outer sides of the cylinder.

The arrangement of the unit square cylinders in a rack as shown in Figs. 10 and 11 can maintain the used nuclear fuel in a non-critical state without any crevices.

As described above, the present rack has a high neutron absorption and a high corrosion resistance, and thus has such advantages as

1) the used nuclear fuel can be maintained in a non-critical state only by providing the amorphous neutron absorber material at the outer sides of unit square cylinders constituting a rack for storing the used nuclear fuel assemblies from a nuclear reactor,

2) it is not necessary to make the unit square cylinders with the neutron absorber material from outer cylinders and inner cylinders and thus the unit square cylinders can be made smaller in size, simpler in fabrication, and lighter in weight. For example, the storing capacity of the present rack of the same volume can be increased by about 25% as compared with the conventional rack with the unit square cylinders comprised of outer and inner cylinders.

3) The present rack has a high corrosion resistance and has a life of over 40 years.

## Claims

1. A compact rack for storing used nuclear fuel assemblies comprising two sets of square cross-sectional parallel axis rectilinear tubes (1,(1,2);11,12) for encasing used nuclear fuel assemblies arranged alternately in chequerboard fashion, characterised in that the tubes of said first set ((1,2);12) each comprise an inner tube (1) and thin strips (2) of amorphous neutron absorber material wound around the inner tube (1) and tubes of the second set (1,11) are each comprised of only an inner tube (1;11).

# 0 107 889

2. A compact rack for storing used nuclear fuel assemblies comprising a plurality of unit square cross-sectional rectilinear tubes (1;21,22) for encasing used nuclear fuel assemblies, characterised in that each said tube (21,22) is made of an inner tube (1) and thin strips (2) of amorphous neutron absorber material overlaid on one pair of opposite outer sides of the inner tube (1), the tubes being so arranged that the overlaid sides of the tube face unoverlaid sides of adjacent tubes in a manner such that said neutron absorber material lies between each neighbouring pair of inner tubes.

3. The compact rack according to claim 1 or claim 2 wherein the neutron absorber material is a nickel-based alloy containing 10—30% by atom of B, 5—25% by atom of Cr and 1—15% by atom of P and at least 30% by atom of Ni and having a pitting corrosion potential of at least 0.9 V.

4. The compact rack according to claim 3, wherein the alloy contains 15—18% by atom of B, 12—20% by atom of Cr, 3—12% by atom of P, the balance being Ni and inevitable impurities.

5. The compact rack according to claim 3, wherein the alloy contains B, Cr and P, and not more than 25% by atom of Fe, optionally not more than 10% by atom of at least one of Mo, W, Ti, Nb and V, optionally not more than 15% by atom of Hf and optionally not more than 5% by atom in total of one or more of Gd, Sm, Eu, Rh, Cd, In, Zr and Ir, the balance being not less than 30% by atom of Ni and inevitable impurities.

6. The compact rack according to claim 5, wherein the amorphous alloy contains 15—18% by atom of B, 12—20% by atom of Cr, and 3—12% by atom of P.

## Patentansprüche

1. Kompaktes Gestell zum Speichern gebrauchter Kernbrennstoffsätze mit zwei Gruppen von geradlinigen Röhren (12(1,2); 11, 12) mit quadratischem Querschnitt und parallelen Achsen zum Umhüllen der gebrauchten Kernbrennstoffsätze, die abwechselnd schachbrettmusterartig angeordnet sind, dadurch gekennzeichnet, daß die Röhren der ersten Gruppe ((1, 2); 12) jeweils ein inneres Rohr (1) und dünne Streifen (2) eines amorphen neutronenabsorbierenden Materials, welches um das innere Rohr (1) gewickelt ist, aufweisen, und daß die Röhren der zweiten Gruppe (1, 11) jeweils nur ein inneres Rohr (1; 11) aufweisen.

2. Kompaktes Gestell zum Speichern gebrauchter Kernbrennstoffsätze mit einer Anzahl von geradlinigen Röhreneinheiten mit quadratischem Querschnitt zum Umhüllen der gebrauchten Kernbrennstoffsätze, dadurch gekennzeichnet, daß jedes Rohr (21, 22) aus einem inneren Rohr (1) und dünnen Streifen (2) aus amorphem neutronenabsorbierenden Material besteht, welches auf ein Paar von einander gegenüberliegenden äußeren Seiten des inneren Rohres (1) aufgelegt ist, wobei die Röhren so angeordnet sind, daß die belegten Seiten eines Rohres den nicht belegten Seiten der benachbarten Röhren so gegenüberliegen, daß das neutronenabsorbierende Material zwischen jedem benachbarten Paar der inneren Röhren liegt.

3. Kompaktes Gestell nach Anspruch 1 oder 2, bei dem das neutronenabsorbierende Material eine Legierung auf Nickelbasis ist, welche 10 bis 30 Atom-% B, 5 bis 25 Atom-% Cr, 1 bis 15 Atom-% P und wenigstens 30 Atom-% Ni enthält, unt das ein Grübchenkorrosionspotential von wenigstens 0,9 V besitzt.

4. Kompaktes Gestell nach Anspruch 3, bei dem die Legierung 15 bis 18 Atom-% B, 12 bis 20 Atom-% Cr und 3 bis 12 Atom-% P enthält, wobei der Rest Ni und unvermeidliche Verunreinigungen sind.

5. Kompaktes Gestell nach Anspruch 3, bei dem die Legierung B, Cr und P und nicht mehr als 25 Atom-% Fe und wahlweise nicht mehr als 10 Atom-% von wengistens einem der Materialien Mo, W, Ti, Mb und V, wahlweise nicht mehr als 15 Atom-% and Hf und wahlweise nicht mehr als 5 Atom-% insgesamt von einem oder mehreren der Materialien Gd, Sm, Eu, Rh, Cd, In, Zr und Ir enthält, wobei der Rest nicht weniger als 30 Atom-% an Ni und unvermeidliche Verunreinigungen beträgt.

6. Kompaktes Gestell nach Anspruch 5, bei dem die amorphe Legierung 15 bis 18 Atom-% B, 12 bis 20 Atom-% Cr und 3 bis 12 Atom-% P enthält.

## Revendications

1. Baie compacte pour le stockage d'assemblages combustibles nucléaires consommés, comportant deux ensembles de tubes rectilignes (1,(1,2);11,12), à axes parallèles et à section transversale carrée, servant à envelopper les assemblages combustibles nucléaires consommés et disposés alternativement à la manière d'un damier, caractérisée en ce que les tubes dudit premier ensemble ((1,2);12) comprennent chacun un tube intérieur (1) et des bandes minces (2) d'un matériau amorphe d'absorption de neutrons, enroulées autour du tube intérieur (1), et que les tubes du second ensemble (1,11) sont constitués chacun uniquement par un tube intérieur (1;11).

2. Baie compacte pour le stockage d'assemblages combustibles nucléaires consommés, comportant une pluralité de tubes rectilignes (1;21,22) possédant une section transversale carrée unitaire et servant à envelopper des assemblages combustibles nucléaires utilisés, caractérisée en ce que chaque tube (21,22) est constitué par un tube intérieur (1) et par des bandes minces (2) formées d'un matériau amorphe d'absorption des neutrons, qui recouvre un couple de faces extérieures opposées dudit tube intérieur (1), les tubes étant disposés de telle sorte que les côtés revêtus du tube sont en vis-à-vis de côtés non revêtus de tubes voisins, de telle sorte que ledit matériau d'absorption des neutrons est situé entre les tubes de chaque couple de tubes intérieurs voisins.

3. Baie compacte selon la revendication 1 ou 2, dans laquelle le matériau d'absorption des neutrons est un alliage à base de nickel contenant 10—30% d'atomes de B, 5—25% d'atomes de Cr et 1—15% d'atomes de P et au moins 30% d'atomes de Ni et possédant un potentiel de corrosion par piqûres, égal à au moins 0,9 V.

4. Baie compacte selon la revendication 3, dans lequel l'alliage contient 15—18% d'atomes de B, 12—20% d'atomes de Cr, 3—12% d'atomes de P, le reste étant constitué par du Ni et des impuretés inévitables.

5. Baie compacte selon la revendication 3, dans laquelle l'alliage contient du B, du Cr et du P, et pas plus de 25% d'atomes de Fe, facultativement pas plus de 10% d'atomes d'au moins l'un des éléments Mo, W, Ti, Nb et V, facultativement pas plus de 15% d'atomes de Hf et facultativement pas plus de 5% d'atomes, au total, d'un ou de plusieurs des éléments Gd, Sm, Eu, Rh, Cd, In, Zr et Ir, le reste étant formé par pas moins de 30% d'atomes de Ni et par des impuretés inévitables.

6. Baie compacte selon la revendication 5, dans laquelle l'alliage amorphe contient 15—18% d'atomes de B, 12—20% d'atomes de Cr et 3—12% d'atomes de P.

# FIG. I
## PRIOR ART

# FIG. 2
## PRIOR ART

(A)

3
1 2

(B)

1
2
3

1

FIG. 3

FIG. 4

FIG. 5

FIG. 6

3

FIG. 7

FIG. 8

(A)          (B)

FIG. 9

(A)

(B)

FIG. 10

FIG. 11